# EUROPEAN PATENT SPECIFICATION

(11) **EP 3 060 802 B1**
(45) Date of publication and mention of the grant of the patent: **01.08.2018**
(21) Application number: 14798931.3
(22) Date of filing: 29.09.2014
(51) Int. Cl.: F04B 17/04, A47J 31/46, F04B 53/00

(54) **HYDRAULIC VIBRATION PUMP FOR COFFEE MACHINE OR BEVERAGE VENDING MACHINE**
HYDRAULISCHE SCHWINGANKERPUMPE FÜR EINE KAFFEEMASCHINE ODER EINEN GETRÄNKEAUTOMATEN
POMPE HYDRAULIQUE À VIBRATIONS POUR MACHINE À CAFÉ OU DISTRIBUTEUR AUTOMATIQUE DE BOISSONS

(30) Priority: 02.10.2013 IT MI20131632
(43) Date of publication of application: 31.08.2016
(73) Proprietor: Ode S.r.l., 23823 Colico (LC) (IT)
(72) Inventor: ROSSANO, Lorenzo, I-23025 Novate Mezzola (SO) (IT); BOSISIO, Andrea, I-22015 Gravellona ed Uniti (CO) (IT)
(74) Representative: Riccardi, Sergio
(86) International application number: PCT/IB2014/001966
(87) International publication number: WO 2015/049570

(56) References cited:
- EP-A1- 2 096 288
- DE-A1-102010 043 862
- GB-A- 1 054 366
- US-A- 3 361 069

## Description

The present invention relates to the field of beverage dispensing machines, such as tea, coffee and like beverages, delivering said beverages automatically, for instance through automatic dispensers or coffee percolators of different kinds, also for household use.

It is known that for delivering a beverage through automatic dispensers, there are many factors to be considered in order to optimize quality performance, machine reliability as well as quality of service offered to users. These factors are obviously depending mostly on the machine components, including at least a reservoir, a pump, a boiler and a delivery system. Among said components a fundamental importance certainly has the hydraulic pump adjusting the water inflow to the coffee machine or automatic dispenser, whose operation and performances affect all the subsequent operations of beverage preparation and delivery.

Therefore it is considered very important that said hydraulic pump is particularly reliable and functional. However, there is a further aspect related to coffee machines and automatic dispensers, mostly depending on the hydraulic pump and deemed to be particularly important in the qualitative evaluation of said devices, namely the noise of said devices during the entire stage of beverage delivery. Indeed the machine noise still more than the machine general performances, has an immediate impact on the user and the noise generated by said devices has a negative impact on the user.

Therefore it is obvious that, among the aspects contributing to improve user's satisfaction for the service given by coffee machines or beverage vending machines, the factor of noise reduction is certainly present. Indeed it is to be noted that said devices may be installed either in private dwelling or working environments such as offices, enterprises, public buildings, or even schools or hospitals. As above said, a known annoyance ground for the user is the fact that in most occurrences, a beverage delivery from an automatic dispenser is accompanied by a rather prolonged and intense noise. It is clear that this may be a considerable problem; as a matter of fact, assuming to use such a machine in a working environment many times a day, noise may be very disturbing for a person working nearby, and this is true also in a school and still more even in a hospital environment where silence and stillness are fundamental. In some particular case, noise generated by coffee machines and/or automatic dispensers, does not meet the regulations on sound pollution, but in any case these automatic dispensers and/or coffee machines are always rather noisy, irrespective of the size of the concerned device. For instance, the noise factor obliges to install these machines in special dedicated rooms, where they are less annoying, or its use is even limited to specific day times, so as not to disturb e.g. workers, students and/or patients.

For this kind of devices, vibration pumps are generally used. It is to be noted that coffee machines for household use may also employ rotary pumps, that are however bigger and more expensive relative to vibration pumps. These vibration pumps are generally valued by manufacturers of coffee machines and automatic dispensers, because they have moderate cost, reduced size, give good performances and easily reach the pressures required for a correct delivery of the beverage. It is to be noted that in a vibration pump, water enters at a zero pressure and must be ejected at a pressure typically comprised between 15 and 25 bars for coffee delivery and about 2 to 10 bars for tea delivery, values that are easily reached by said pumps.

A vibration pump comprises a mobile core, springs and valves allowing its operation. These vibration pumps, although they are rather performing and practical for use in said beverage delivery devices, are however rather prone to failure, as it will be discussed hereinafter with reference to the annexed drawings, and are the primary ground of noise generated by automatic dispensers and coffee machines.

For instance, document US 3361069 discloses a vibration pump for pressurized fluids, comprising a housing for an electromagnetically actuated plunger and a spring, said vibration pump being adapted to solve the problem of a greater reliability of said pump when subject to strong external vibrations, irrespective of the assembling direction of the pump. Said vibration pump comprises a primary spring with variable elastic constant, to push the mobile core to the outlet and said spring is adapted to enhance the performances of the vibration pump by increasing energy and therefore the plunger motion speed through its exhaust stroke. Said spring thus is adapted to improve the performance of the vibration pump, but said document does not mention that said plunger in the exhaust stroke strikes the housing walls and causes a clear noisy impact, which is not only disturbing the user, but also increases definitely wear of said vibration pump, reducing its useful life, to the detriment of the general reliability of the machine where said pump is integrated.

It is therefore an object of the present invention, to provide for vibration pumps allowing, under the same performances, a reduction of noise and a greater reliability, relative to traditional vibration pumps.

It is a further object of the present invention, to improve and increase the useful life of said vibration pumps.

Thus it is an object of the present invention, to enhance reliability of said dispensers and coffee machines.

Another object of the present invention, is to enhance the satisfaction of the final user as to economic savings on the maintenance interventions.

More particularly, an object of the present invention is to make a vibration pump considerably reducing the generated noise in operation, causing a relevant noise of the dispenser and/or coffee machine.

Therefore an object of the present invention is to reduce the sound pollution caused by said pumps in operation.

Finally it is an object of the present invention to enhance the satisfaction of the final user and improve quality of the devices.

A further object of the present invention is to make the foregoing by optimizing costs.

The above mentioned objects are attained by the present invention, describing use of vibration pumps comprising use of springs having two or more elastic constants, e.g. bilinear springs, instead of the linear springs which are always used in the field of manufacturing automatic dispensers and coffee machines. In a particular advantageous way, in a preferred embodiment of the present invention, said bilinear springs are being used, which are generally used in totally different environments, such as the automotive and pharmaceutical sector, which were never used for vibration pumps operating in the field of the present invention.

Through proper technical tests, it was verified that vibration pumps comprising springs having two or more elastic constants, such as bilinear springs, on the same performances, have a much higher reliability in comparison with traditional vibration pumps.

It was also ascertained that, with use in coffee machines and beverage automatic dispensers of said vibration pumps provided with bilinear springs, the sound pollution or noise of the so configured product, is reduced of at least 20%-30% relative to the noise measured on traditional automatic dispensers and coffee machines having conventional vibration pumps.

It is therefore apparent that the reduction of noise generated by said devices is fundamental and innovative, in the light of the discussion set forth in the foregoing introductory part of this description.

These and other advantages are attained according to the present invention, by a hydraulic vibration pump for coffee machines or beverage automatic dispensers. These devices comprise at least a reservoir, a boiler, a delivery system, said hydraulic vibration pump to regulate the water inflow to the machine, said pump comprising at least a main spring and a secondary spring, characterized by the fact of using, as main or secondary spring, at least one spring having two or more elastic constants. Said at least one spring, having two or more elastic constants, allows said pump to reduce considerably the operation noise, and moreover it increases the pump performances.

These and other advantages of using, in the field of coffee machines and automatic dispensers, a vibration pump comprising use of at least one spring having inside two or more elastic constants, will become apparent from the following detailed description of a preferred embodiment, in which said spring is simply a bilinear spring, to be read making reference to the annexed sheets of drawings, in which:
Fig. 1 shows a longitudinal section of a vibration pump provided with a bilinear spring according to the present invention;
Fig. 2 shows a detail of said bilinear spring, when positioned inside the vibration pump; and
Figs. 3a, 3b show the reference diagrams force/compression of a linear spring and a bilinear spring, respectively.

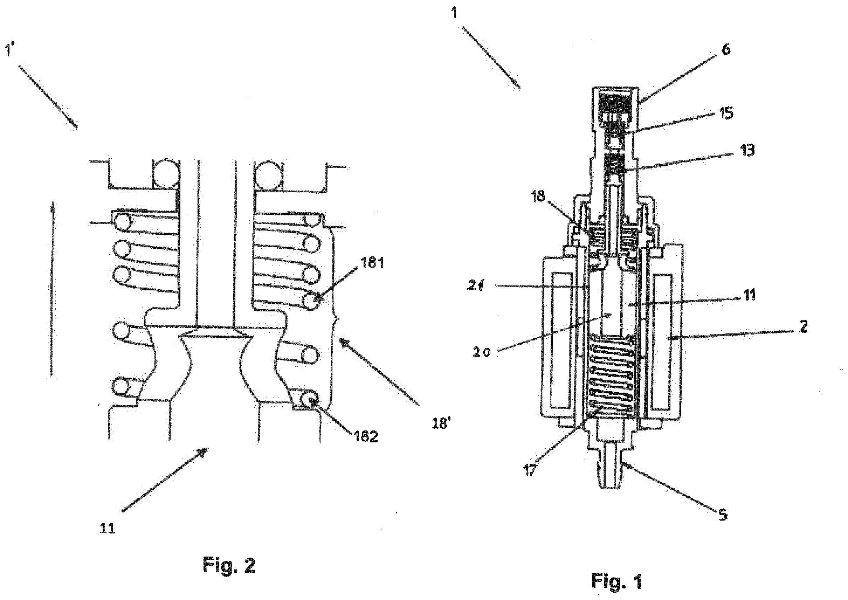

With reference to Figures 1 and 2, a vibration pump 1 generally comprises a solenoid 2, a movable core 11, inserted in a system of springs 17,18, inside a housing 21, a cylindrical sleeve 5 containing the movable core 11, and two series arranged check valves 13, 15. Solenoid 2 is generally fed at a pulsed alternate voltage, so that the movable core 11 undergoes a magnetic force generated by solenoid 2, which can move said movable core 11 upwards, and said movable core 11 compresses spring 17. Spring 17 (often referred to also as main spring 17) on compression absorbs the kinetic energy of movable core 11 and returns said energy to the core when the magnetic force is absent, thus changing the direction of movement of said movable core 11. At this point spring 18 (referred to also as secondary spring 18) is compressed, causing the movable core 11 to gradually slow down, until said movable core 11 reaches a determined position. Spring 18 is particularly useful to avoid that the movable core 11 strikes the walls of sleeve 5, thus dispersing energy uselessly; moreover spring 18 returns the movable core 11 in the rest position.

On arrival of the next impulse, the movable core 11 starts again from the initial position. In this way the movable core 11 goes on oscillating between its bottom and top dead center, at a frequence of about 50 Hz. The movable core 11, on compression of spring 17, generates a negative pressure allowing water to pass through a channel 20, made inside the movable core 11. This vacuum causes the first check valve 13 to open and at this point water fills out the chamber in which the check valve 13 is arranged. There are further sealing members (that are not described being not important for this invention) holding water in said chamber, preventing its return along the walls of the movable core 11. When spring 17 reaches its maximum compression (i.e. at its top dead center), the movable core 11 reverses its motion and moves to close the check valve 13, gradually reducing the chamber volume and generating a pressure. Consequently the second check valve 14 opens and water flows out from the chamber in the same direction of the motion of the movable core 11, at a determined working pressure. In prior art the above mentioned springs 17 and 18 are linear, in any case working with a constant step. More particularly, said secondary spring 18 is arranged inside the pump without being constrained at both ends, thus having some play inside the pump. The noise generated by vibration pumps and those generally used in the application field of automatic dispensers and coffee machines, is just caused by the fact that the movable core 11 in its braking and stopping step, packs the spring 18, thus generating said noise which is considerably intense and irritating. As above noted, the noise generated by the presently used pumps is felt by the final users as very annoying, and sometimes the noise intensity exceeds the limits allowed by the regulations against sound pollution. It is well known that just in view of the noise of said devices, it is often necessary to place them in a dedicated room, in order not to disturb too much the personnel nearby.

Moreover it is also clear that the hit caused by impact of the movable core 11 on the spring 18, causes also wear of said spring 18, with consequent negative effects on reliability of the vibration pump 1, which is more prone to failure.

As above said, the object of the present invention is to solve the mentioned problems, maintaining the pump performance, but enhancing its reliability and considerably reducing the generated noise, through use of spring having at least two different elastic constants such as, in the present preferred embodiment of the invention, bilinear springs instead of linear springs. It has been ascertained that use of this kind of springs having two or more elastic constants, which were never used in this technological field, in a very advantageous way, solves brilliantly all the above mentioned problems.

Therefore it was verified for instance that, by insertion of at least a bilinear spring in the system consisting of springs 17, 18, inside the housing 21 (in this preferred embodiment as secondary spring 18', properly dimensioned as shown in detail in Fig. 2), the performances of the vibration pump 1 are definitely increased, obtaining also a reduction of noise generated by the pump in the order of 20%-30% relative to the same vibration pump 1 using linear springs. Indeed, performances being equal (considered in terms of pressure and flow rate), when comparing two vibration pumps 1-1', the one of prior art and the other being provided with at least one bilinear spring, it was possible to verify that in the vibration pump 1' having a bilinear spring 18', the impact caused by hit of movable core 11 is considerably reduced, this occurring without additional modifications to pump 1' relative to pump 1, excepting the cited use of using a bilinear spring 18' instead of the known linear secondary spring 18. It is also to be noted that the difference of elastic constant is represented in Fig. 2 as a different pitch between upper 181 and lower 182 turns of the spring.

It was also verified that, if instead of a bilinear spring 18' one would use merely a linear spring 18" with a higher elastic constant than the springs normally used in this field, the noise generated by the impact would be partially reduced, but performances of the vibration pump would be impaired. Indeed, a linear spring 18" with a higher elastic constant would cause the movable core 11 to have less stroke and maximum speed, thus to the detriment of performances. On the contrary, using a bilinear secondary spring 18', as described in the present invention, a clear- incremental effect of efficiency of the vibration pump 1' is noticed, because using a bilinear secondary spring 18', the movable core 11 does not lose energy by the impact, but transfers energy to water that can reach higher pressures and flow rates.

Finally it was verified that in a further advantageous way said secondary spring 18 e.g. of a bilinear type, may be positioned indifferently with the turns having the higher elastic constant facing either the start side or the end side of the stroke. In other terms, the positioning direction of said bilinear spring 18', with the turns of higher elastic constant facing the movable core 11 (stroke start) or the stroke end side, does not alter at all the particularly advantageous operation of the vibration pump 1' provided with a bilinear spring 18'.

Moreover in this case the movable spring 11 maintains higher speeds, taking also into account that all the other conditions are not changed, i.e. the stroke of the movable core 11 is the same, as well as dimensions and shape of the spring. Only in the stroke end portion the deceleration of the movable core 11 is suddenly increased, just in view of the bilinear spring 18', whose elastic constant is varied, rising in the terminal stretch of the stroke of movable core 11. The elastic constants of the springs to be used, and consequently the distribution of the turns and the material used to make said springs, will depend on the desired performances (pressure and flow rate) of the vibration pump.

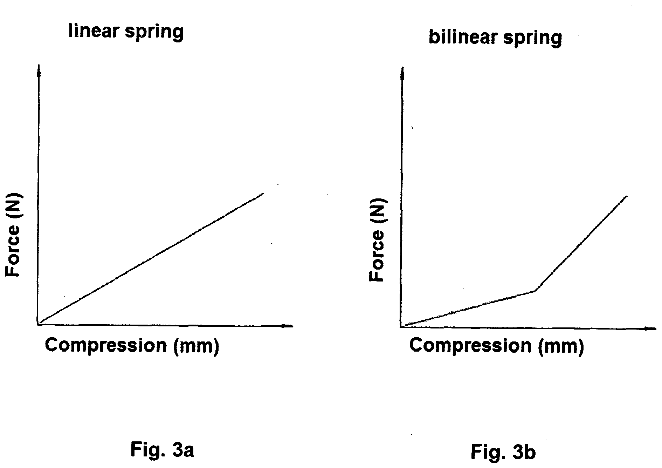

With reference now to Figures 3a, 3b, the bilinear spring 18' in a particular advantageous way, during the first compression stage, allows to have a lower elastic constant relative to the elastic constant characterizing a linear spring 18 used in the prior art, while in the following second compression stage of the bilinear spring 18' by the movable core 11, the second elastic constant comes in, which on the contrary is higher than the elastic constant of a generic linear spring 18 of the prior art, used for this purpose.

Therefore by using a bilinear secondary spring 18', a clear increase of efficiency of the vibration pump 1 was found, because the movable core 11 does not lose energy during impacts. Indeed when the movable core 11 reaches the stroke end, since the impact is eliminated, the spring is no more packed and the corresponding energy which was converted into heat or vibrations, is not being lost any more. On the contrary, said energy is transferred to water, which can reach higher pressures and flow rates. Therefore the movable core 11, in view of the particularly advantageous use of a bilinear spring 18', has higher and greater speed in comparison with those attained by a linear spring 18, in any case using the same stroke and suddenly increasing deceleration only in the final portion of its stroke.

More particularly by using a bilinear spring 18', it is possible to keep constant the average diameter of the spring spiral, and to use suitable materials already known and approved for vibration pumps employed in this field, such as stainless steel, AISI 302, AISI 631, EN 1.4462 steel. It is clear that this is a further advantage for the manufacturers of said devices, as it is possible to use the same materials and production lines, with considerable economic savings, however obtaining a new and better, more reliable and in a particular advantageous way less noisy product.

It was verified that application of springs with two or more elastic constants, such as for instance the bilinear springs, allows in a very advantageous way, a considerable reduction of noise generated by beverage automatic dispensers and coffee machines, even of the household kind, and this factor meets the demand of users, requesting more noiseless machines, but also the stricter regulatory and marketing requirements.

It is finally to be noted that it is possible to use, instead of the bilinear springs, even quadratic springs, also not used for vibration pumps in this field. The quadratic springs would also give similar advantages as above listed, but use of a quadratic spring, although being advantageous for pump performances and less noise, would nevertheless require a geometric modification of the vibration pumps, because for its best operation, the cross-sectional shape of said quadratic pump, used as a secondary pump, should be conical, and this would require to modify at least partially the geometry of the vibration pump, thus losing the advantage of using the already existing pumps. The result would be in any case excellent, but the production costs of the various components of the vibration pump would be increased.

The foregoing description relates only to some preferred embodiments of the vibration pumps particularly employed in the field of beverage automatic dispensers and coffee machines, and more particularly the operative circuits of said devices, comprising use of at least one spring having two or more elastic constants, such as a bilinear spring and/or a spring having features comparable with this kind of spring; said spring may be positioned, preferably but not exclusively, as secondary spring 18' inside said vibration pump 1, and may be constrained or not, made with any material adapted for this purpose, as well as it may have alternative embodiments other than those hereinbefore described, wherein modifications or changes may for instance relate to the geometries - chosen for single movable or fixed elements, the materials adopted for each member and even the specifications of the operative system, and may be made without departing however from the scope of protection of the present invention, as defined in the appended claims.

## Claims

1. A hydraulic vibration pump for coffee machine or beverage vending machine, regulating the inflow of water comprising at least a housing (21) to accommodate at least one movable core (11), a spring system (17,18) consisting of a main spring (17) and a secondary spring (18), said movable core (11) undergoing a magnetic force generated by a solenoid (2), the motion of said movable core (11) compressing said main spring (17), said main spring (17) absorbing the kinetic energy of said core (11) and returning said energy to said movable core (11) reversing the direction of motion of said movable core (11) ***characterized in that*** said movable core (11) is compressing said secondary spring (18) of said spring system (17,18), and said secondary spring (18) is a spring (18') featured with two or more elastic constants, to reduce energy loss and noise caused by the impact of said movable core (11) in compression on said secondary spring (18').

2. The hydraulic vibration pump according to claim 1, wherein said secondary spring (18') is a bilinear spring.

3. The hydraulic vibration pump according to claim 1 or 2, wherein said secondary spring (18') is positioned with turns having increasing or decreasing elastic constants indifferently facing the stroke start or end within said housing (21).

4. The hydraulic vibration pump according to claim 3, wherein said secondary spring (18') reducing shocks on the movable core (11), reduces the loss of energy of the core (11) during impacts, increasing the efficiency of the vibration pump.

5. The hydraulic vibration pump according to the preceding claims, wherein the external configuration, namely size and shape of said secondary spring (18'), is equivalent to that of a linear secondary spring (18).

6. The hydraulic vibration pump according to the preceding claims, wherein said two elastic constants of said secondary spring (18') reduce the intensity of impact of said movable core (11) on said secondary spring (18') and consequently wear of said vibration pump.

7. The hydraulic vibration pump according to the preceding claims, wherein said secondary spring (18') provided with two or more elastic constants, reduces the noise produced by the vibration pump from 20% to 30%.

8. The hydraulic vibration pump according to the preceding claims, wherein said secondary spring (18') is made of materials such as AISI 302, AISI 631 or EN 1.4462 stainless steel or other material suitable for the purpose.

9. The hydraulic vibration pump according to claim 1, wherein a quadratic spring can be used as secondary spring (18').

10. The hydraulic vibration pump according to claim 1, wherein said main spring (17) is a spring having a variable elastic constant.

## Patentansprüche

1. Hydraulische Schwingankerpumpe für eine Kaffeemaschine oder einen Getränkeautomaten mit Regelung des Wasserzulaufs, enthaltend mindestens ein Gehäuse (21) für mindestens einem beweglichen Kern (11) und eine aus einer Hauptfeder (17) und einer Nebenfeder (18) bestehende Federanordnung (17, 18), wobei der bewegliche Kern (11) einer von einem Solenoid (2) erzeugten magnetischen Kraft unterzogen wird, wobei die Bewegung des beweglichen Kerns (11) die Hauptfeder (17) derart drückt, dass die Hauptfeder (17) die kinetische Energie des beweglichen Kerns (11) aufnimmt und diese kinetische Energie an den beweglichen Kern (11) zurückgibt, indem die Bewegungsrichtung des beweglichen Kerns (11) umgekehrt wird, **dadurch gekennzeichnet, dass** der bewegliche Kern (11) auch die Nebenfeder (18) der Federanordnung (17, 18) drückt und die Nebenfeder (18) aus einer mit zwei bzw. mehreren elektrischen Konstanten versehenen Feder (18') besteht, um den vom Druckstoss des Gestaltung bzw. Abmessung Kerns (11) auf die Nebenfeder (18') verursachten Energieverlust bzw. Lärm zu vermindern.

2. Hydraulische Schwingankerpumpe nach Anspruch 1, worin die Nebenfeder (18') eine bilineare Feder ist.

3. Hydraulische Schwingankerpumpe nach Anspruch 1 bzw. 2, worin die Nebenfeder (18') Windungen mit zunehmenden bzw. abnehmenden elastischen Konstanten, die gleichgültig nach Beginn bzw. Ende der Bewegung innerhalb des Gehäuses (21) gewandt sind, aufweisen.

4. Hydraulische Schwingankerpumpe nach Anspruch 3, worin die Nebenfeder (18') durch die Beschränkungen der Druckstösse auf den beweglichen Kern (11) den Energieverlust des Kerns (11) bei den Stössen vermindert und die Leistungsfähigkeit der Schwingankerpumpe erhöht.

5. Hydraulische Schwingankerpumpe nach den vorhergehenden Ansprüchen, worin die äußere Gestaltung bzw. Abmessung und Gestalt der Nebenfeder (18') gleichwertig mit einer linearen Feder (18) ist.

6. Hydraulische Schwingankerpumpe nach den vorhergehenden Ansprüchen, worin die zwei bzw. mehreren elastischen Konstanten der Nebenfeder (18') die Stossintensität des beweglichen Kerns (11) auf die Nebenfeder (18') und infolgedessen den Verschleiss der Schwingankerpumpe vermindern.

7. Hydraulische Schwingankerpumpe nach den vorhergehenden Ansprüchen, worin die mit zwei bzw. mehreren elastischen Konstanten versehene Nebenfeder (18') den von der Schwingankerpumpe erzeugten Lärm um 20% bis 30% absenkt.

8. Hydraulische Schwingankerpumpe nach den vorhergehenden Ansprüchen, worin die Nebenfeder (18') mit Werkstoffen wie Edelstahl, AISI 302, AISI 631, EN 1.4462 bzw. anderen geeigneten Werkstoffen hergestellt wird.

9. Hydraulische Schwingankerpumpe nach Anspruch 1, worin eine quadratische Feder als Nebenfeder (18') verwendet werden kann.

10. Hydraulische Schwingankerpumpe nach Anspruch 1, worin die Hauptfeder (17) eine Feder mit einer veränderlichen elastischen Konstante ist.

## Revendications

1. Pompe hydraulique à vibrations pour machine à café ou distributeur automatique de boissons en réglant l'afflux d'eau, comprenant au moins un logement (21) pour un noyau mobile (11) et un système de ressorts (17, 18) formé par un ressort principal (17) et un ressort secondaire (18), le dit noyau mobile (11) étant soumis à une force magnétique générée par un solénoïde (2), le mouvement du dit noyau mobile (11) comprimant le dit ressort principal (17), le ressort principal (17) absorbant l'énergie cinétique du dit noyau (11) et restituant l'énergie cinétique au dit noyau mobile en inversant le sens de mouvement du noyau (11), **caractérisée en ce que** le noyau mobile (11) comprime le dit ressort secondaire (18) du système de ressorts (17, 18) et le dit ressort secondaire (18) est un ressort (18') ayant deux ou plusieurs constantes d'élasticité, pour réduire la dispersion d'énergie et le bruit provoqués par le choc du dit noyau mobile (11) en compression sur le dit ressort secondaire (18').

2. Pompe hydraulique à vibrations selon la revendication 1, dont ledit ressort secondaire (18') est un ressort bilinéaire.

3. Pompe hydraulique à vibrations selon la revendication 1 ou 2, dont ledit ressort secondaire (18') est positionné avec les spires ayant les constantes d'élasticité croissantes ou décroissantes, qui sont tournées indifféremment vers le début ou le bout de course à l'intérieur du dit logement (21).

4. Pompe hydraulique à vibrations selon la revendication 3, dont le ressort secondaire (18') par la réduction des chocs sur le noyau mobile (11), réduit la perte d'énergie du noyau (11) pendant les chocs, en augmentant l'efficacité de la pompe à vibrations.

5. Pompe hydraulique à vibrations selon les revendications précédentes, dont la configuration extérieure ou les dimensions et la forme du ressort secondaire (18') est équivalente à celle d'un ressort linéaire.

6. Pompe hydraulique à vibrations selon les revendications précédentes, dont les deux ou plusieurs constantes d'élasticité du dit ressort secondaire (18') réduisent l'intensité du choc du dit noyau mobile (11) sur le ressort secondaire (18') et conséquemment l'usure de la pompe hydraulique à vibrations.

7. Pompe hydraulique à vibrations selon les revendications précédentes, dont ledit ressort secondaire (18') ayant deux ou plusieurs constantes d'élasticité réduit de 20% à 30% le bruit provoqué par la pompe à vibrations.

8. Pompe hydraulique à vibrations selon les revendications précédentes, dont ledit ressort secondaire (18') est fabriqué par matériaux comme acier inoxydable, AISI 302, AISI 631 ou EN 1.4462 ou d'autres matériaux appropriés.

9. Pompe hydraulique à vibrations selon la revendication 1, dont un ressort quadratique peut être utilisé comme ressort secondaire (18').

10. Pompe hydraulique à vibrations selon la revendication 1, dont le dit ressort principal (17) est un ressort avec une constante d'élasticité variable.
